(19) Europäisches Patentamt
European Patent Office
Office européen des brevets

(11) **EP 4 083 614 B1**

(12) **EUROPÄISCHE PATENTSCHRIFT**

(45) Veröffentlichungstag und Bekanntmachung des Hinweises auf die Patenterteilung:
**01.10.2025 Patentblatt 2025/40**

(21) Anmeldenummer: **21171124.7**

(22) Anmeldetag: **29.04.2021**

(51) Internationale Patentklassifikation (IPC):
**G01N 23/18** *(2018.01)* **G01N 33/02** *(2006.01)*
**G06Q 10/00** *(2023.01)*

(52) Gemeinsame Patentklassifikation (CPC):
**G06Q 10/00; G01N 23/18;** G01N 2223/303;
G06T 2207/10112

(54) **VERFAHREN ZUM ERFASSEN DER DETEKTIONSEMPFINDLICHKEIT EINES RÖNTGENGERÄTS**

METHOD FOR DETECTING THE DETECTION SENSITIVITY OF AN X-RAY MACHINE

PROCÉDÉ DE DÉTECTION DE LA SENSIBILITÉ DE DÉTECTION D'UN APPAREIL À RAYONS X

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**02.11.2022 Patentblatt 2022/44**

(73) Patentinhaber: **Sesotec GmbH**
**94513 Schönberg (DE)**

(72) Erfinder:
• **Kurz, Reinhard**
**94269 Rinchnach (DE)**
• **Pedersen, Doug**
**Cambridge, Ontario**
**N1R 8P7 (CA)**

(74) Vertreter: **Glück Kritzenberger Patentanwälte PartGmbB**
**Franz-Mayer-Str. 16a**
**93053 Regensburg (DE)**

(56) Entgegenhaltungen:
EP-A2- 3 734 259    US-A1- 2018 209 922
US-A1- 2018 214 113    US-A1- 2019 162 679
US-A1- 2021 004 994

• KRUTH J P ET AL: "Computed tomography for dimensional metrology", CIRP ANNALS, vol. 60, no. 2, 3 June 2011 (2011-06-03), pages 821 - 842, XP028262022, ISSN: 0007-8506, [retrieved on 20110603], DOI: 10.1016/J.CIRP.2011.05.006

## Beschreibung

### Technisches Gebiet

Die US 2021/0004994 A1 zeigt ein Verfahren, bei welchem bei einem Röntgengerät zur Fremdstoffbestimmung in Produkten im Rahmen der Erzeugung von Trainingsdaten virtuelle Fremdkörpersignale mit den Produktbildern verrechnet werden, um das Gerät auf die Erkennung derartiger Fremdkörper anzulernen.

Für die Konfiguration eines Röntgengeräts, welches im Rahmen einer Produktinspektion, d.h. zur Fremdstofferkennung in einem Produkt, insbesondere im Rahmen der Lebensmittelkontrolle, eingesetzt wird, muss ein vorgegebenes Produkt in einem ersten Schritt eingelernt werden, indem man es in einem Einlernmodus mehrmals durch das Gerät fördert. Dabei wird das Gerät automatisch so konfiguriert, dass die maximale Detektionsempfindlichkeit bei diesem Produkt erreicht werden kann, d.h. der Betriebspunkt des Geräts wird derart eingestellt, dass ein gut verwertbares Detektionssignal erhalten wird.

Die tatsächlich erreichbare Detektionsempfindlichkeit zur Erkennung von Fremdkörpern unterschiedlicher Größe und Materials ist damit aber noch nicht bekannt und muss in weiteren Tests zeitaufwendig ermittelt werden. Hierzu werden verschiedene Testkarten mit Referenz-Fremdkörpern in Form von Testkugeln auf das Produkt gelegt und mehrmals zusammen mit dem Produkt durch das Röntgengerät gefördert. Eine Testkarte enthält eine definierte Anzahl an Testkugeln aus einem vorgegebenen Material (z.B. 100 Stück aus Glas oder VA oder Kunststoff) und mit einem bestimmten Durchmesser, z.B. in einem Bereich von 0,4 mm bis 10 mm.

Die Detektionsempfindlichkeit wird dann aus dem so erhaltenen Detektionsbild mittels einer Bildauswertesoftware ermittelt. Die Detektionsempfindlichkeit wird zum Beispiel ermittelt, indem die Anzahl der erkannten Fremdkörper in Relation zur Anzahl der auf der Testkarte vorhandenen Fremdkörper gesetzt wird. Wenn z.B. die Testkarte 50 Testkugeln aus Glas mit 3 mm Durchmesser enthält, wovon die Bildauswertesoftware nur 40 Testkugeln als Fremdkörper erkannt werden, bedeutet das eine Detektionsempfindlichkeit bei Glasfremdkörpern mit 3 mm Durchmesser von 80%. Gewöhnlich wird dieser Wert aus mehreren Testdurchläufen gemittelt, was personalintensiv und zeitaufwendig ist. Zudem müssen oft verschiedene Materialien und Größen als Fremdkörper durchgetestet werden, was das Verfahren noch zeitaufwendiger macht.

### Darstellung der Erfindung

Es ist daher Aufgabe der vorliegenden Erfindung, ein Verfahren zur Verfügung zu stellen, das die Nachteile des Standes der Technik überwindet, insbesondere die zeitaufwendige Ermittlung der Detektionsempfindlichkeit für Fremdkörper.

Diese Aufgabe wird erfindungsgemäß durch das Verfahren gemäß dem unabhängigem Anspruch 1 gelöst. Weitere vorteilhafte Aspekte, Details und Ausgestaltungen der Erfindung ergeben sich aus den abhängigen Ansprüchen, der Beschreibung sowie den Zeichnungen.

Das erfindungsgemäße Verfahren zum Erfassen der Detektionsempfindlichkeit eines Röntgengeräts zur Fremdstofferfassung in einem Produkt basiert auf einem Detektor dessen Detektionssignal des Produktes ein Detektionsbild mit einer definierten Auflösung ergibt, welches zur Fremdstofferfassung ausgewertet wird.

Mit dem Fördern eines Produkts durch das Röntgengerät entsteht ein Grauwertbild, das die Dämpfung des Röntgenstrahls durch das Produkt numerisch ausdrückt. Die Grauwerte sind indirekt proportional zu der Materialdichte und zur Dämpfung des Produkts im Röntgenstrahl. Desto dunkler das Grauwertbild ist, desto größer ist die Dämpfung an dem Produkt aufgrund der Dicke und der Materialdichte des Produkts.

In einer Testkörper-Analysephase, die zur Festlegung der Parameter für die Produktinspektion dient, wird die Dämpfung des Detektionssignals in dem Detektionsbild eines definierten Produkts durch einen Testkörper definierten Materials und definierter Größe in Form von Dämpfungswerten erfasst und abgespeichert. Diese Testkörper dienen zur Nachbildung von Fremdkörpern in einem zu überwachenden Produkt, z.B. einem Lebensmittel.

Man untersucht also vorab, wie sich ein Fremdkörper definierter Größe und Materials auf das Detektionsbild des Produktes auswirkt, d.h. der Grauwert des Detektionsbildes wird an der Stelle, an der der Testkörper das Produkt überdeckt dunkler. Der Dämpfungswert kann zum Beispiel ein Wert sein, der angibt wie stark der Grauwert des Produktes durch den Testkörper verändert wird, in welchem Fall der Dämpfungswert ein Faktor sein kann, der mit dem Produktgrauwert verknüpft, z.B. verrechnet, z.B. multipliziert wird. Es ist jedoch auch im Rahmen der Verknüpfung möglich, als Dämpfungswert einfach den resultierenden Grauwert abzuspeichern, der an der Überlappungsstelle durch den Testkörper entsteht. In diesem Fall wird als Verknüpfung der Produktgrauwert an den Testkörperstellen einfach durch den resultierenden Grauwert ersetzt.

Diese Auswirkungen der Testkörper unterschiedlicher Größe und Materials auf das Produkt wird vorzugsweise für unterschiedliche Betriebspunkte des Röntgendetektors und der Röntgenquelle durchgeführt, so dass man den aktuellen Betriebspunkt des Röntgengerätes berücksichtigt. Selbstverständlich werden die Auswirkungen der Testkörper auch auf das Detektionsbild unterschiedlicher Produkte untersucht um einen Testkörper-spezifischen Dämpfungswert für alle zu untersuchenden Produkte zu erhalten.

Im täglichen Betrieb, d.h. in der laufenden Produktinspektion wird nun das Detektionsbild des untersuchten Produkts (Produktgrauwert) an mehreren Positionen mit den abgespeicherten Dämpfungswerten des Testkörpers verknüpft, insbesondere verrechnet (resultierender Grauwert) und zur Bestimmung der Detektionsempfindlichkeit herangezogen, z.B. in gewohnter Weise einer Bildauswertung zugeführt.

Der Unterschied zum "manuellen" Empfindlichkeitsbestimmung liegt somit darin, dass zur Erfassung der Detektionsempfindlichkeit nicht mehr "manuell" irgendwelche Testkörper auf das Produkt gelegt werden und der Erfassung zugeführt werden müssen, sondern es wird einfach der gewünschte Testkörperdatensatz geladen und mit dem Detektionsbild des Produkts verknüpft, insbesondere verrechnet. Dieses Bild wird für die Erfassung der Detektionsempfindlichkeit vorzugsweise einer Bildauswertung zugeführt, die ermittelt, wie viele von den "verrechneten" Testkörpern auch von der Bildauswertung erkannt werden, was den Wert für die Detektionsempfindlichkeit des Röntgengeräts für den entsprechenden Testkörper (in der Produktinspektion dann die wirklichen Fremdkörper) darstellt.

Aufgrund der Erfindung erfolgt somit die Bestimmung der Detektionsempfindlichkeit vollständig automatisiert und kann ohne zusätzliches Fördern des Produkts zusammen mit Testkörper enthaltenden Testkarten ablaufen, so dass direkt nach dem Einlernen eines Produkts die zugehörige Empfindlichkeit bestimmt werden kann, denn durch die Erfindung wird die Testkörperinformation in Abhängigkeit dessen Material und Größe per Software errechnet/ erstellt und mit dem Grauwertbild des Produkts so verknüpft, insbesondere verrechnet, als würde tatsächlich ein Produkt mit Testkarte aufgenommen werden. Alle weiteren Informationen zur Detektionsempfindlichkeit können aus diesen 'synthetischen' erzeugten Bildern automatisch berechnet werden.

Erfindungsgemäß wird zur Bestimmung der Detektionsempfindlichkeit das mit den Testkörpern verrechnete Detektionsbild einer Bildauswertung, z.B. einer Bildauswerteeinheit, zugeführt, und als Maß für die Detektionsempfindlichkeit wird das Verhältnis der in der Bildauswertung erkannten Testkörper zur Anzahl der in dem Detektionsbild verrechneten Testkörper verwendet. Hieraus resultiert eine Prozentangabe, die Auskunft darüber gibt, wie gut der Röntgendetektor und die Röntgenquelle mit ihrem eingestellten Betriebspunkt die durch die Testkörper verursachten Unterschiede im Detektionsbild aufzulösen-vermag, was wiederum eine Kennzahl dafür darstellt, wie gut der Röntgendetektor entsprechende Fremdkörper in dem untersuchten Produkt erkennt.

Als Fremdkörper, insbesondere in Lebensmitteln erscheinen Metall-, Glas- und Kunststoffteile, die aus der Herstellung und Verarbeitung der Produkte resultieren. Derartige Fremdkörper sind zu erkennen und die entsprechenden Produkte aus dem Verkehr zu ziehen.

Vorzugsweise wird das Detektionsbild als Grauwertbild erfasst und der Dämpfungswert in der Testkörper-Analysephase wird als ein Dämpfungsfaktor abgespeichert, der in der laufenden Produktinspektion mit dem Grauwertbild (Produktgrauwert) des untersuchten Produkts zu einem resultierenden Grauwert verrechnet wird. Auf diese Weise werden spezifisch für jedes Produkt und jede Art von Testkörper ohne großen Rechenaufwand die Testkörper in das Detektionsbild des Produkts eingerechnet. Das Verfahren lässt sich somit schnell für eine Vielzahl von Testkörpermaterialien, z.B. Kunststoff, Glas und Metall, als auch für unterschiedliche Größen durchführen.

Wenn die Testkörper in das Detektionsbild des Produktes hineingerechnet werden, entsteht an den Rändern der Testkörperbereiche zum Produktbild eine scharfe Linie, die eventuell die Bildauswertung beeinträchtigen könnte. Daher wird vorzugsweise das Detektionsbild im Randbereich zwischen Produktgrauwert und resultierendem Grauwert mit einer Weichzeichnerfunktion bearbeitet, um scharfe Grauwertunterschiede im resultierenden Bild zu vermeiden.

In einer vorteilhaften Ausführungsform der Erfindung ist das Detektionsbild entsprechend der Auflösung des Detektors in Rasterpunkte aufgeteilt. Eine Verrechnung des Testkörperbildes mit dem Detektionsbild des Produktes (Produktgrauwert) findet dann vorzugsweise derart statt, dass an jedem Punkt der Verrechnung des Detektionsbildes mit den abgespeicherten Dämpfungswerten des Testkörpers die Dicke an den verschiedenen Punkten eines Testkörpers aus dem Durchschnitt von vier benachbarten Rasterpunkten bestimmt wird. Da die Testkörper in der Regel kugelförmig sind, haben sie von der Mitte zum Rand hin eine abnehmende Durchstrahlungsdicke, die natürlich im verrechneten Bild berücksichtigt werden muss. Durch die Mittelung über vier Punkte ist es nicht notwendig für jeden Auflösungspunkt die Testkörperdicke rechnerisch einzeln zu ermitteln und durch die Mittelung wird automatisch eine gewisse Glättung der Dickenübergänge erzielt.

Die separaten Dämpfungswerte eines kugelförmigen Fremdkörpers bei einer Kugel werden insbesondere gemäß der Formel

$$D(n,m) = 2 * r * \cos\left(\sin^{-1}\left(\frac{rd * A * \sqrt{n^2 + m^2}}{r}\right)\right)$$

auf die Rasterpunkte in n Spalten und m Zeilen verteilt. Hierbei bedeuten

| D (n, m) [mm] | Testkörperdicke am Rasterpunkt n, m. |
| r [mm] | Kugelradius |
| n | Anzahl der Spalten in x-Richtung (Abszisse) |
| m | Anzahl der Zeilen in y-Richtung (Ordinate) |
| rd [mm] | Detektorauflösung |
| A | Abbildungsfaktor |

Vorzugsweise werden daher in der Testkörper-Analysephase für ein Testkörpermaterial die Dämpfungswerte für unterschiedliche Testkörperdicken erfasst. Aus diesen Dämpfungswerten kann dann der Dämpfungswert für eine bestimmte nicht erfasste Testkörperdicke berechnet werden.

In einer vorteilhaften Weiterbildung der Erfindung wird in der Testkörper-Analysephase die produkt- und testkörperspezifische Erfassung und Abspeicherung der Dämpfungswerte für unterschiedliche Betriebspunkte des Röntgengeräts vorgenommen. Somit erhält man die Dämpfungsfaktoren der Testkörper für jeden Betriebspunkt der Röntgenquelle, was es erlaubt, die Testkörperverrechnung zur Ermittlung der Detektionsempfindlichkeit bei allen Betriebspunkten der Röntgenquelle vorzunehmen.

Vorzugsweise wird in der laufenden Produktinspektion das Detektionsbild (Produktgrauwert) mit dem abgespeicherten Dämpfungswert multipliziert. Dies ist das einfachste Verrechnungsmodell der Beeinflussung des Produktbildes durch die Testkörper. Wenn beispielsweise der Faktor 0,7 ist, wird an der Testkörperstelle die Helligkeit des Produktgrauwertes mit dem Faktor 0,7 multipliziert, wodurch ein entsprechend dunklerer resultierender Grauwertbereich entsteht.

In einer vorteilhaften Ausführungsform der Erfindung werden in der laufenden Produktinspektion die Positionen der Fremdkörper auf dem Röntgenbild mit Hilfe eines softwaretechnisch festgelegten Testrasters vorgegeben, wobei die Abstände zwischen den Testkörpern derart vorgegeben werden, dass die Gefahr von Bildauswertefehlern bei der Ermittlung der Detektionsempfindlichkeit ausgeschlossen werden.

Vorzugsweise werden die Dämpfungswerte in der Testkörper-Analysephase in Form von Kennlinien abgespeichert, bei denen in der Abszisse linear unterschiedliche Produktgrauwerte und in der Ordinate linear resultierende Grauwerte aufgetragen sind, wobei in diesen Kennlinien Testkörper unterschiedlichen Materials und unterschiedlicher Dicke beschrieben sind. Aus diesen Kennlinien lassen sich leicht für unterschiedliche Produkte und unterschiedliche Testkörpermaterialien und -größen die resultierenden Grauwerte ermitteln, die dann im Detektionsbild des Produktes an die Stelle der Testkörper gesetzt werden. Entsprechend wird somit in der Produktinspektion der Dämpfungswert ganz einfach aus den Kennlinien bestimmt.

In einer vorteilhaften Weiterbildung der Erfindung erfolgt auf der Basis der erfassten Detektionsempfindlichkeit eine kontinuierliche Überwachung der Betriebsparameter des Röntgengeräts. Man kann somit bei einer Verschlechterung der Detektionsempfindlichkeit des Röntgengeräts entweder dessen Betriebsparameter nachstellen oder eine Wartung durchführen, wenn der Abfall der Detektionsempfindlichkeit außergewöhnlich ist.

Vorzugsweise werden auf der Basis der Erfassung der Detektionsempfindlichkeit die Auswirkungen nachträglicher Änderungen der Detektionsparameter, insbesondere Nachlernen von Produkteigenschaften, auf die Detektionsempfindlichkeit überprüft. Man kann hierdurch sofort ersehen, ob irgendwelche "manuelle" Nachlernschritte zu einer Verringerung der Detektionsempfindlichkeit führen und entsprechend nachbessern.

In einer vorteilhaften Ausführungsform der Erfindung werden schon beim standardmäßigen Einlernvorgang eines Produktes die verrechneten Detektionsbilder zur Parametrierung des Röntgengeräts verwendet. Somit lassen sich die "virtuellen", d.h. verrechneten Testkörperbilder auch zur Einstellung des Röntgengeräts selbst nutzen.

Ein verrechnetes Testkörperbild kann gemäß der Geometrie des Testkörpers auch unterschiedliche Dämpfungsfaktoren enthalten. Das Produktgrauwertbild (Detektionsbild) wird somit über die Fläche des Testkörpers mit dem "Testkörperbild" verrechnet, welches entsprechend seiner Geometrie unterschiedliche Dämpfungsfaktoren, aufweist. So dämpft ein kugelförmiger Testkörper in der Mitte des Testkörperbildes mehr als am Rand, weil die Materialdicke im Röntgenstrahl dort größer ist. Ein Röntgendetektor hat eine gewisse Auflösung. Das Testkörperbild, welches in der Analysephase generiert wird, erstreckt sich damit über einen gewissen Pixelbereich, wobei (bei einem kugelförmigen Testkörper) die Pixel in der Mitte des Testkörperbildes einen niedrigeren Dämpfungsfaktor als am Rand des Testkörperbildes haben.

Es ist für den Fachmann offensichtlich, dass die oben beschriebenen Ausführungsformen der Erfindung in beliebiger Weise miteinander kombiniert werden können.

Folgende Begriffe werden synonym verwendet: Gerät - Röntgengerät Detektionsbild - Produktbild - Grauwertbild - Produktgrauwert - Eingangsgrauwert; resultierender Grauwert - Grauwert des Detektionsbild nach Verrechnung an der Stelle eines Testkörpers; Bildauswertung - Bildauswerteeinheit; Testkörperbild - Verrechnungsbereich eines Testkörpers im Produktbild, je nach Geometrie mit unterschiedlichen Dämpfungsfaktoren;

## Kurze Beschreibung eines Ausführungsbeispiels

Die Erfindung soll nachfolgend anhand eines Ausführungsbeispiels im Zusammenhang mit der Zeichnung näher erläutert werden. In dieser zeigen

Fig. 1 ein Diagramm zur Ermittlung des Dämpfungsfaktors mit dem Produktgrauwert auf der X-Achse und dem resultierenden Grauwert für unterschiedliche Testkörpermaterialien und -größen auf der Y-Achse; bei einem bestimmten Betriebspunkt; und

Fig. 2 eine Tabelle mit der Testkörperdicke eines kugelförmigen Testkörpers in einer Auflösung von n·m Punkten.

## Weg zur Ausführung der Erfindung

Die Transmissionsparameter, d.h. wie stark ein Röntgenstrahl von einem Material absorbiert wird, hängt grundsätzlich von der Materialart und der Materialdicke des untersuchten Produkts ab. Die Helligkeit des im Röntgengerät erhaltenen Detektionsbildes eines Produkts hängt darüber hinaus auch von Geräteparametern ab, wie zum Beispiel der Röntgenleistung und den geometrischen Rahmenbedingungen im Röntgengerät.

Mit dem Fördern eines Produkts durch das Röntgengerät entsteht ein Grauwertbild, das die Dämpfung des Röntgenstrahls numerisch ausdrückt. Die Grauwerte sind indirekt proportional zu der Materialdichte und zur Dämpfung des Produkts im Röntgenstrahl. Desto dunkler das Grauwertbild ist, desto größer ist die Dämpfung und die Materialdichte.

Die Erfindung vereinfacht nun die Bestimmung der Detektionsempfindlichkeit, indem die Testkörper zu dessen Bestimmung nicht mehr auf das Produkt aufgelegt und durch das Röntgengerät hindurch gefördert werden müssen, sondern die Auswirkungen der Testkörper auf das Produktbild werden vorab in einer Analysephase in Form von Dämpfungswerten, insbesondere Dämpfungsfaktoren, erfasst und abgespeichert. Im Produktüberwachungsbetrieb werden die Testkörper dann nur noch softwaretechnisch simuliert, indem das Produktbild des zu untersuchenden Produkts mit den Dämpfungswerten verknüpft, z.B. verrechnet wird.

Um die Auswirkung eines Testkörpers in Zusammenhang mit dem Produkt zu simulieren, muss das Grauwertbild des Produkts entsprechend der Materialart und der Materialdicke des Testkörpers und in Abhängigkeit vom Betriebspunkt der Röntgenquelle softwaretechnisch verändert werden.

Dazu wird in einem ersten Schritt für jede vorhandene Kugelgröße eines Testkörpers einer Materialart (Metall, Kunststoff, Glas etc.) bei jedem möglichen Betriebspunkt der Röntgenquelle eine Testreihe am Röntgengerät durchgeführt, um den Einfluss der in den Testkarten enthaltenen Testkörper mit den unterschiedlichen vorgegebenen Kugeldurchmessern in direkten Zusammenhang mit den im Bild vorhandenen Grauwerten zu bringen. Jede einzelne Testkarte wird dabei beispielsweise auf verschieden dicke Papierstapel, als Referenz für ein Produkt mit besonders homogener Grauwertverteilung, gelegt und durch das Gerät gefördert. Aus den entstandenen Grauwertbildern wird für die verschiedenen Kugelgrößen der Testkörper bei jeder Papierstapeldicke der Grauwert des dunkelsten Pixels innerhalb einer Testkugel aufgenommen.

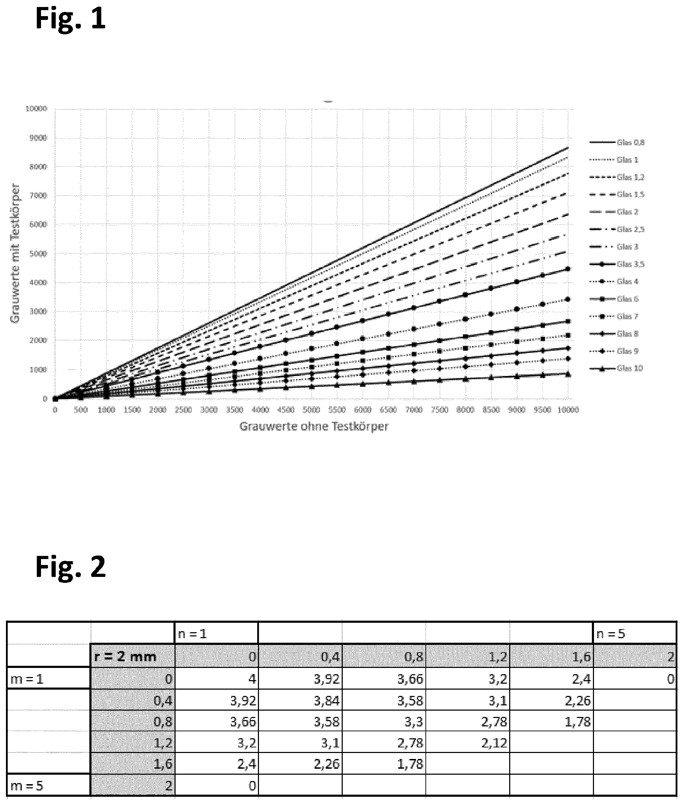

Um die prozentuale Dämpfung für die verschiedenen Kugeldurchmesser der Testkörper zu bestimmen, werden letztgenannte Pixel ins Verhältnis zum Mittelwert des Produktbilds ohne Fremdkörper gesetzt. Das Ergebnis ist ein konstanter Dämpfungsfaktor für jeden Kugeldurchmesser über die verschiedenen Papierdicken. Im nächsten Schritt wird ein Geradenmodell aufgestellt, wie es in Fig. 1 wiedergegeben ist.

In diesem Diagramm der Fig. 1 sind die Eingangsgrauwerte oder auch Produktgrauwerte ohne Fremdkörper im Koordinatensystem horizontal und die durch die Beeinflussung des Produkts durch die Testkörper resultierenden Grauwerte vertikal aufgetragen. Die im Analyse-Schritt bestimmten Dämpfungsfaktoren sind hier als Steigungen der Geraden ersichtlich, so dass für jede Dicke und Materialart eines Testkörpers eine Ursprungsgerade mit individueller Steigung über den gesamt möglichen Grauwertbereich entsteht. Alle Geraden befinden sich zwischen der Winkelhalbierenden des kartesischen Koordinatensystems und der horizontalen Achse, da die Dämpfungsfaktoren und somit die Geradensteigungen im Bereich zwischen 0 und 1 liegen.

Die im Geradenmodell der Fig. 1 festgelegten Steigungen stellen die Dämpfungsfaktoren für die exakt vorgegebenen Kugeldurchmesser dar. Es ist aber auch möglich, Dämpfungsfaktoren für andere Testkörpergrößen zu bestimmen, die in der Analysephase gar nicht ermittelt worden sind. Mit Hilfe der tatsächlich in der Analysephase erfassten Kugeldurchmesser werden charakteristische Kennlinien (z.B. mathematische Funktionen) erstellt, mit denen diese Zwischenwerte berechnet werden.

Das in der Figur 1 gezeigte Modell, sowie die charakteristische Kennlinie dienen als Grundlage für die softwaretechnische Veränderung der Produktbilder durch die Dämpfungswerte bzw. Dämpfungsfaktoren der Testkörper. Es sollte für jeden Betriebspunkt der Röntgenquelle und für jede Materialart erstellt werden, um den direkten Bezug zu den reell aufgenommenen Produktbildern zu wahren und eine einfachere Validierung des Simulationsmodells zu ermöglichen. Weitere Einflussfaktoren auf dieses Geradenmodell sind technische Eigenschaften von Röntgenquelle und Detektor und deren Abstand zueinander.

## Berechnung der synthetischen Fremdkörperbilder

Nachdem oben die Festlegung der Dämpfungsparameter in Abhängigkeit der zu betrachtenden Einflussfaktoren für jede beliebige Materialdicke erläutert wurde, wird in diesem Abschnitt die Berechnung der synthetischen Testkörperbilder beschrieben, die in der Regel kugelförmig sind.

Damit können für jeden Testkörper bzw. für jedes Testkörperbild unterschiedliche Dämpfungsfaktoren angegeben werden, die der Geometrie und damit der unterschiedlichen Dicken des Testkörpers Rechnung tragen. So dämpft ein kugelförmiger Testkörper im Zentrum mehr als an den Rändern, weil dort die Testkörperstärke größer ist. Dies wird durch folgende Gleichung berücksichtigt.

Ausgangspunkt hierfür ist folgender mathematischer Zusammenhang zur Bestimmung der Dicke an einem beliebigen Punkt einer Kugel in Abhängigkeit des Kugelradius r und eines Pixelrasters, das durch n und m abgebildet wird.

$$D(n, m) = 2 * r * \cos\left(\sin^{-1}\left(\frac{rd * A * \sqrt{n^2 + m^2}}{r}\right)\right)$$

mit

| | |
|---|---|
| D (n, m) [mm] | Dicke der Kugel als Funktion von n und m |
| r [mm] | Radius der Kugel |
| n | Anzahl der Spalte in x-Richtung |
| m | Anzahl der Zeile in y-Richtung |
| rd [mm] | Auflösung Detektor |
| A | Abbildungsfaktor |

Mit Hilfe des Abbildungsfaktors A (0 < A <=1) werden die Abbildungsgegebenheiten eines Röntgengeräts berücksichtigt. Hierbei fließt der Abstand zwischen Röntgenquelle und Detektor, der Brennfleck der Röntgenquelle und die Detektorauflösung mit ein. Die Abbildungsfaktoren wurden zunächst empirisch festgelegt, indem die reellen Kugelgrößen mit der Kugelabbildung auf dem Röntgenbild verglichen, in Relation gesetzt und unter Berücksichtigung der Detektorauflösung umgerechnet wurden. Zusätzlich wurde die Richtigkeit dieses Vorgehens mit einer theoretischen Abbildungsberechnung bestätigt. Der Abbildungsfaktor ist somit das Größenverhältnis von Gegenstand im Detektionsbild/ reeller Gegenstand.

## Röntgen mit softwarebasierter Empfindlichkeitsprognose

Mit Einführen des Pixelrasters entsprechend der Auflösung des Röntgendetektors kann die örtliche Auflösung des Detektors mathematisch verifiziert werden. Es setzt sich in x- und y- Richtung als Vielfaches aus dem Produkt der Detektorauflösung rd und des Abbildungsfaktors A zusammen. Für den Abbildungsfaktor A = 1 ergibt sich bei einem Detektor mit einer Auflösung von rd = 0,4 mm und einem Kugelradius von r = 2 mm beispielsweise das in Fig. 2 gezeigte Raster. Aufgrund der Punkt- und Achsensymmetrie einer Kugel reicht die Berechnung eines Kugelviertels aus, um die Dicken der gesamten Kugel vollständig zu bestimmen. Eine entsprechende Tabelle ist in Fig. 2 wiedergegeben.

Mit den vier Eckpunkten sämtlicher im Raster vorhandener Quadrate mit den Seitenlängen rd*A lässt sich pro Quadrat eine mittlere Dicke berechnen, die den in Fig. 1 aufgezeigten Dämpfungsgeraden zugeordnet wird. Mit den aufgenommenen Grauwerten des Produktbilds und der zugeordneten Dämpfung kann der neue Grauwert für das synthetische Röntgenbild multiplikativ berechnet werden. Nach der Grauwertberechnung der einzelnen Pixel kann zusätzlich ein Weichzeichner für die zwei äußeren Pixelschichten der Fremdkörper verwendet werden, um den Übergang von der simulierter Testkugel (Testkörperbild) auf das Produkt (Produktbild) realitätsnah zu gestalten.

Nach der erstmaligen automatischen Festlegung der Empfindlichkeiten mit Hilfe der synthetischen Röntgenbilder für das eingelernte Produkt, können Veränderungen am Setup des Röntgengeräts einfacher festgestellt werden. Dazu muss die erstmalig festgelegte Empfindlichkeit im laufenden Betrieb überprüft werden. Die Überprüfung kann zum einen in bestimmten Zeitintervallen oder bei der Ausführung bestimmter Aktionen in der Bediensoftware vollzogen werden. Die erstgenannte Überprüfung hilft bei der Wartung und Validierung des Geräts, da beispielsweise nachlassende Signalqualität der Röntgenstrahlung aufgezeigt wird. Mit der Überprüfung bei bestimmten Nutzeraktionen können Bedienfehler unverzüglich aufgezeigt werden, wenn z.B. Parametersätze ungünstig verändert werden. Zusätzlich können Veränderungen im eingelernten Produkt diagnostiziert werden, wenn sich die Materialdichte oder die Homogenität der Grauwerte des Produkts ändert. Durch die realitätsgetreue Simulation der Fremdkörper können im nächsten Schritt die synthetischen Bilder auch direkt für die Konfiguration und automatische Optimierung der Auswerteparameter eines Röntgengeräts schon beim Einlernvorgang verwendet werden.

**Patentansprüche**

1.  Verfahren zum Erfassen der Detektionsempfindlichkeit eines Röntgengeräts zur Fremdstofferfassung in einem Produkt, mit einem Detektor dessen Detektionssignal ein Detektionsbild mit einer definierten Auflösung ergibt, welches zur Fremdstofferfassung ausgewertet wird, mit folgenden Schritten:

    - in einer Testkörper-Analysephase, die zur Festlegung der Parameter für die Produktinspektion dient, wird die Dämpfung des Detektionssignals in dem Detektionsbild des Produkts durch einen Testkörper definierten Materials und definierter Größe in Form von Dämpfungswerten erfasst und abgespeichert,
    - in der laufenden Produktinspektion wird das Detektionsbild des Produkts (Produktgrauwert) an mehreren Positionen mit den abgespeicherten Dämpfungswerten des Testkörpers verknüpft, insbesondere verrechnet (resultierender Grauwert) und zur Bestimmung der Detektionsempfindlichkeit herangezogen, bei der das mit den Dämpfungswerten der Testkörper verknüpfte, insbesondere verrechnete Detektionsbild einer Bildauswerteeinheit zugeführt wird, und als Maß für die Detektionsempfindlichkeit das Verhältnis der in der Bildauswertung erkannten Testkörper zu der Anzahl der in dem Detektionsbild verrechneten Testkörper verwendet wird.

2.  Verfahren nach Anspruch 1, **dadurch gekennzeichnet, dass** das Detektionsbild als Grauwertbild erfasst wird, und dass der Dämpfungswert in der Testkörper-Analysephase als ein Dämpfungsfaktor abgespeichert wird, der in der laufenden Produktinspektion mit dem Grauwertbild (Produktgrauwert) des untersuchten Produkts zu einem resultierenden Grauwert verrechnet wird.

3.  Verfahren nach Anspruch 2, **dadurch gekennzeichnet, dass** das Detektionsbild im Randbereich zwischen Produktgrauwert und resultierendem Grauwert mit einer Weichzeichnerfunktion bearbeitet wird.

4.  Verfahren nach einem der vorhergehenden Ansprüche, **dadurch gekennzeichnet, dass** das Detektionsbild entsprechend der Auflösung des Detektors in Rasterpunkte aufgeteilt ist, und dass an jedem Punkt der Verrechnung des Detektionsbildes mit den abgespeicherten Dämpfungswerten die Dicke an den verschiedenen Punkten eines Testkörpers aus dem Durchschnitt von vier benachbarten Rasterpunkten bestimmt wird.

5.  Verfahren nach einem der vorhergehenden Ansprüche, **dadurch gekennzeichnet, dass** die separaten Dämpfungswerte eines kugelförmigen Fremdkörpers bei einer Kugel gemäß der Formel

$$D(n, m) = 2 * r * \cos(\sin^{-1}\left(\frac{rd * A * \sqrt{n^2 + m^2}}{r}\right))$$

    auf die Rasterpunkte in n Spalten und m Zeilen verteilt wird,
    mit

    D (n, m) [mm] Testkörperdicke am Rasterpunkt n, m.
    r [mm] Kugelradius
    n Anzahl der Spalten in x-Richtung (Abszisse)
    m Anzahl der Zeilen in y-Richtung (Ordinate)
    rd [mm] Detektorauflösung
    A Abbildungsfaktor

6.  Verfahren nach einem der vorhergehenden Ansprüche, **dadurch gekennzeichnet, dass** in der Testkörper-Analysephase für ein Testkörpermaterial die Dämpfungswerte für unterschiedliche Testkörperdicken erfasst werden, und dass aus diesen Dämpfungswerten der Dämpfungswert für eine bestimmte Testkörperdicke interpoliert wird.

7.  Verfahren nach einem der vorhergehenden Ansprüche, **dadurch gekennzeichnet**, in der Testkörper-Analysephase die produkt- und testkörperspezifische Erfassung und Abspeicherung der Dämpfungswerte für unterschiedliche Betriebspunkte des Röntgengeräts vorgenommen wird.

8.  Verfahren nach einem der vorhergehenden Ansprüche, **dadurch gekennzeichnet, dass** in der laufenden Produktinspektion das Detektionsbild (Produktgrauwert) mit dem abgespeicherten Dämpfungswert multipliziert wird.

9.  Verfahren nach einem der vorhergehenden Ansprüche, **dadurch gekennzeichnet,**

**dass** in der laufenden Produktinspektion die Positionen der Fremdkörper auf dem Röntgenbild mit Hilfe eines softwaretechnisch festgelegten Testrasters vorgegeben werden.

10. Verfahren nach einem der vorhergehenden Ansprüche, **dadurch gekennzeichnet, dass** die Dämpfungswerte in der Testkörper-Analysephase in Form von Kennlinien abgespeichert werden, bei denen in der Abszisse linear unterschiedliche Produktgrauwerte und in der Ordinate linear resultierende Grauwerte aufgetragen sind, wobei in diesen Kennlinien Testkörper unterschiedlichen Materials und unterschiedlicher Dicke beschrieben sind.

11. Verfahren nach Anspruch 10, **dadurch gekennzeichnet, dass** in der Produktinspektion der Dämpfungswert aus den Kennlinien bestimmt wird.

12. Verfahren nach einem der vorhergehenden Ansprüche, **dadurch gekennzeichnet, dass** auf der Basis der erfassten Detektionsempfindlichkeit eine kontinuierliche Überwachung der Betriebsparameter des Röntgengeräts erfolgt.

13. Verfahren nach einem der vorhergehenden Ansprüche, **dadurch gekennzeichnet, dass** auf der Basis der Erfassung der Detektionsempfindlichkeit die Auswirkungen nachträglicher Änderungen der Detektionsparameter, insbesondere Nachlernen von Produkteigenschaften, auf die Detektionsempfindlichkeit überprüft werden.

14. Verfahren nach einem der vorhergehenden Ansprüche, **dadurch gekennzeichnet, dass** schon beim standardmäßigen Einlernvorgang eines Produktes die verrechneten Detektionsbilder zur Parametrierung des Röntgengeräts verwendet werden.

**Claims**

1. Method for detecting the detection sensitivity of an X-ray device for foreign object detection in a product, comprising a detector whose detection signal yields a detection image with a defined resolution, which is evaluated for the detection of foreign objects, comprising the following steps:

   - in a test body analysis phase, which serves to define the parameters for product inspection, the attenuation of the detection signal in the detection image of the product by a test body of defined material and defined size is recorded and stored in the form of attenuation values,
   - during ongoing product inspection, the detection image of the product (product grayscale value) at multiple positions is linked, in particular mathematically combined (resulting grayscale value), with the stored attenuation values of the test body and used to determine the detection sensitivity, wherein the detection image linked, in particular mathematically combined, with the attenuation values of the test body is fed to an image evaluation unit, and the ratio of the test bodies detected in the image evaluation to the number of test bodies mathematically combined in the detection image is used as a measure of the detection sensitivity.

2. Method according to claim 1, **characterized in that** the detection image is recorded as a grayscale image, and the attenuation value in the test body analysis phase is stored as an attenuation factor, which is mathematically combined with the grayscale image (product grayscale value) of the examined product during ongoing product inspection to obtain a resulting grayscale value.

3. Method according to claim 2, **characterized in that** the detection image is processed in the edge area between product grayscale value and resulting grayscale value using a blur function.

4. Method according to one of the preceding claims, **characterized in that** the detection image is divided into grid points according to the resolution of the detector, and at each point of combination of the detection image with the stored attenuation values, the thickness at the various points of a test body is determined from the average of four adjacent grid points.

5. Method according to one of the preceding claims, **characterized in that** the individual attenuation values of a spherical foreign object are distributed across the grid points in n columns and m rows according to the formula:

$$D(n,m) = 2 * r * \cos\left(\sin^{-1}\left(\frac{rd * A * \sqrt{n^2 + m^2}}{r}\right)\right)$$

with

D(n, m) [mm] Test body thickness at grid point n, m
r [mm] Sphere radius
n Number of columns in x-direction (abscissa)
m Number of rows in y-direction (ordinate)
rd [mm] Detector resolution
A Imaging factor

6. Method according to one of the preceding claims, **characterized in that** in the test body analysis phase, the attenuation values for different test body thicknesses are recorded for a given test body material, and that the attenuation value for a specific test body thickness is interpolated from these attenuation values.

7. Method according to one of the preceding claims, **characterized in that** during the test body analysis phase, product- and test-body-specific recording and storage of the attenuation values is carried out for different operating points of the X-ray device.

8. Method according to one of the preceding claims, **characterized in that** during ongoing product inspection, the detection image (product grayscale value) is multiplied by the stored attenuation value.

9. Method according to one of the preceding claims, **characterized in that** during ongoing product inspection, the positions of the foreign objects in the X-ray image are predefined using a software-defined test grid.

10. Method according to one of the preceding claims, **characterized in that** the attenuation values in the test body analysis phase are stored in the form of characteristic curves, in which linearly different product grayscale values are plotted on the abscissa and linearly resulting grayscale values on the ordinate, wherein the characteristic curves describe test bodies of different materials and thicknesses.

11. Method according to claim 10, **characterized in that** during product inspection, the attenuation value is determined from the characteristic curves.

12. Method according to one of the preceding claims, **characterized in that** based on the recorded detection sensitivity, a continuous monitoring of the operating parameters of the X-ray device is carried out.

13. Method according to one of the preceding claims, **characterized in that** based on the detection sensitivity recording, the impact of subsequent changes to the detection parameters, in particular the retraining of product characteristics, is checked with regard to the detection sensitivity.

14. Method according to one of the preceding claims, **characterized in that** already during the standard training process of a product, the combined detection images are used for parameterizing the X-ray device.


**Revendications**

1. Procédé de détection de la sensibilité de détection d'un appareil à rayons X en vue de la détection de substances étrangères dans un produit, à l'aide d'un détecteur dont le signal de détection fournit une image de détection d'une résolution définie, qui est évaluée en vue de la détection de substances étrangères, procédé comportant des étapes suivantes :

- dans une phase d'analyse du corps d'essai servant à déterminer les paramètres d'inspection du produit, l'atténuation du signal de détection dans l'image de détection du produit est détectée et enregistrée sous la forme de valeurs d'atténuation par un corps d'essai de matière définie et de taille définie,
- dans l'inspection du produit en cours, l'image de détection du produit (niveau de gris du produit) est reliée en plusieurs positions aux valeurs d'atténuation enregistrées du corps d'essai, en particulier compensée (niveau de gris résultant) et utilisée pour déterminer la sensibilité de détection, pour laquelle l'image de détection reliée aux valeurs d'atténuation des corps d'essai et, en particulier compensée, est acheminée à une unité d'évaluation de l'image, et le rapport entre les corps d'essai reconnus durant l'évaluation de l'image et le nombre de corps d'essai compensés dans l'image de détection est utilisé comme grandeur de sensibilité de détection.

**2.** Procédé selon la revendication 1, **caractérisé en ce que** l'image de détection est détectée en tant qu'image en niveau de gris, et que la valeur d'atténuation dans la phase d'analyse du corps d'essai est enregistrée en tant qu'un facteur d'atténuation, qui est compensé dans l'inspection du produit en cours avec l'image en niveau de gris (niveau de gris du produit) du produit examiné pour donner un niveau de gris résultant.

**3.** Procédé selon la revendication 2, **caractérisé en ce que** l'image de détection est traitée avec une fonction de flou dans la zone périphérique entre le niveau de gris du produit et le niveau de gris résultant.

**4.** Procédé selon l'une des revendications précédentes, **caractérisé en ce que** l'image de détection est répartie conformément à la résolution du détecteur en points de grille, et **en ce qu'**à chaque point de la compensation de l'image de détection avec les valeurs d'atténuation enregistrées, l'épaisseur aux différents points d'un corps d'essai est déterminée à partir de la moyenne de quatre points de grille adjacents.

**5.** Procédé selon l'une des revendications précédentes, **caractérisé en ce que** les valeurs d'atténuation séparées d'un corps étranger de forme sphérique sont réparties pour une sphère sur les points de grille en n colonnes et en m lignes, selon à la formule suivante :

$$D(n, m) = 2 * r * \cos(\sin^{-1}\left(\frac{rd * A * \sqrt{n^2 + m^2}}{r}\right))$$

avec

D (n, m) [mm] épaisseur du corps d'essai au point de grille n, m.
r [mm] rayon de la spère
n nombre de colonnes en X (abscisse)
m nombre de lignes en Y (ordonnée)
rd [mm] résolution du détecteur
A facteur de reproduction

**6.** Procédé selon l'une des revendications précédentes, **caractérisé en ce que**, dans de la phase d'analyse du corps d'essai, les valeurs d'atténuation pour différentes épaisseurs de corps d'essai sont détectées pour un matériau du corps d'essai, et **en ce qu'**à partir de ces valeurs d'atténuation, la valeur d'atténuation pour une épaisseur de corps d'essai spécifique est interpolée.

**7.** Procédé selon l'une des revendications précédentes, **caractérisé en ce que**, dans la phase d'analyse du corps d'essai, la détection et l'enregistrement spécifiques au produit et au corps d'essai des valeurs d'atténuation pour différents points de fonctionnement de l'appareil à rayons X sont effectués.

**8.** Procédé selon l'une des revendications précédentes, **caractérisé en ce que**, dans l'inspection du produit en cours, l'image de détection (niveau de gris du produit) est multipliée par la valeur d'atténuation enregistrée.

**9.** Procédé selon l'une des revendications précédentes, **caractérisé en ce que**, dans l'inspection du produit en cours, les positions des corps étrangers sur l'image radiographique sont prédéfinies à l'aide d'une grille de test définie par logiciel.

**10.** Procédé selon l'une des revendications précédentes, **caractérisé en ce que** les valeurs d'atténuation sont enregistrées dans la phase d'analyse du corps d'essai sous forme de courbes caractéristiques dans lesquelles sont appliqués en abscisse des niveaux de gris du produit linéairement différents et en ordonnée des niveaux de gris résultant linéairement, dans lequel, dans ces courbes caractéristiques, des corps d'essai de différents matériaux et de différentes épaisseurs sont décrits.

**11.** Procédé selon la revendication 10, **caractérisé en ce que** dans l'inspection du produit la valeur d'atténuation est déterminée à partir des courbes caractéristiques.

**12.** Procédé selon l'une des revendications précédentes, **caractérisé en ce que** sur la base de la sensibilité de détection détectée, une surveillance continue des paramètres d'exploitation de l'appareil à rayons X est effectuée.

**13.** Procédé selon l'une des revendications précédentes, **caractérisé en ce que** sur la base de la détection de la sensibilité de détection, les effets de modifications ultérieures des paramètres de détection, notamment un apprentissage ultérieur des propriétés du produit, sont contrôlés quant à la sensibilité de détection.

**14.** Procédé selon l'une des revendications précédentes, **caractérisé en ce que** d'ores et déjà pendant le processus d'apprentissage standard d'un produit, les images de détection compensées sont utilisées pour paramétrer l'appareil à rayons X.

# Fig. 1

# Fig. 2

| | | n = 1 | | | | | n = 5 |
|---|---|---|---|---|---|---|---|
| | r = 2 mm | 0 | 0,4 | 0,8 | 1,2 | 1,6 | 2 |
| m = 1 | 0 | 4 | 3,92 | 3,66 | 3,2 | 2,4 | 0 |
| | 0,4 | 3,92 | 3,84 | 3,58 | 3,1 | 2,26 | |
| | 0,8 | 3,66 | 3,58 | 3,3 | 2,78 | 1,78 | |
| | 1,2 | 3,2 | 3,1 | 2,78 | 2,12 | | |
| | 1,6 | 2,4 | 2,26 | 1,78 | | | |
| m = 5 | 2 | 0 | | | | | |

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20210004994 A1